# EUROPEAN PATENT SPECIFICATION

(11) **EP 0 638 295 B1**
(45) Date of publication and mention of the grant of the patent: **11.02.1998**
(21) Application number: 94830225.2
(22) Date of filing: 13.05.1994
(51) Int. Cl.: A61C 17/06

(54) **Filter unit for dental aspiration apparatus**
Filtereinheit für dentale Saugvorrichtung
Unité filtrante pour aspirateur de dentisterie

(30) Priority: 16.07.1993 IT MO930019 U
(43) Date of publication of application: 15.02.1995
(73) Proprietor: CATTANI S.P.A., I-43100 Parma (IT)
(72) Inventor: Cattani, Augusto, I-43100 Parma (IT)
(74) Representative: Lanzoni, Luciano

(56) References cited:
- EP-A- 0 040 181
- EP-A- 0 214 105
- FR-A- 2 035 488

## Description

Aspiration apparatus for dental use is provided with suction tubes used to aspirate blood and saliva, remove water and other extraneous substances from a patient's mouth during dental treatment.

When not in use, the tubes are placed in forked seats or the like, usually mounted on a rest forming part of a console, whereat the source of the depression creating the aspiration is also located, and to which source of depression they are connected by an end of their flexible tubes.

The tubes, through a further tube attached to the console, are thence connected to a suction pump creating a depression inside the console itself.

Devices such as pneumatic valves are normally provided inside the console to interrupt aspiration automatically when the tube is placed on the rest: these valves are generally commanded by a switch in turn activated by the tube, through pneumatic distributors or solenoid valves of known type.

During aspiration, the fluid entrained in the tube crosses the valves and descends into a collector, wherein a filter effecting a first filtering of the fluid is situated; downstream of the filter the filtered fluid is expelled from the console through the tube connecting the apparatus to the suction pump.

Such a console-cum-filter plant apparatus is described in patent EP 0040181 (US 43869110), by the same applicant.

The major drawback exhibited by these apparatus is that the valves have to be cleaned out very frequently as the aspirated fluids form residual crusts, which would soon lead to unsatisfactory functioning if left to harden.

In an attempt to obviate this drawback, filters have been inserted directly into the tubes in order to effect a first filtration:
such a filter unit is described in EP - A - 0 214 105, which discloses all the features of the preamble of claim 1 and wherein each single suction tube is provided with distinct filtering means located upstream of the pneumatic valve.

This solution, though, apart from leading to the need to equip each separate tube with its own filter, also necessitates using very small filters in the individual tubes, which block up even more quickly.

A principal aim of the present invention is to obviate the above-mentioned drawback by providing a filter plant which is constructionally simple but which helps to reduce the number of cleaning operations necessary, especially where the pneumatic valves are concerned.

A significant advantage of the filter plant is that at the same time as solving the above problems, one large filter alone is used.

These aims and others besides are all attained by the filter plant of the invention which comprises a box structure containing a collector connected to a suction pump and, with an interposition of a pneumatic valve, also to each tube through second conduits, and which is characterised in that each of the second conduits comprises a syphon in a central part of which a chamber housing a filter for the aspirated fluid is located: the filters are mechanically interconnected in a single filtering structure, are separated one from another by a wall, and are inserted in the syphons through a connecting hole in such a way that the wall closes the hole.

Further characteristics and advantages of the present invention will better emerge from the detailed description that follows, of a preferred but non-exclusive embodiment here illustrated in the form of a non-limiting example in the accompanying drawings, in which:

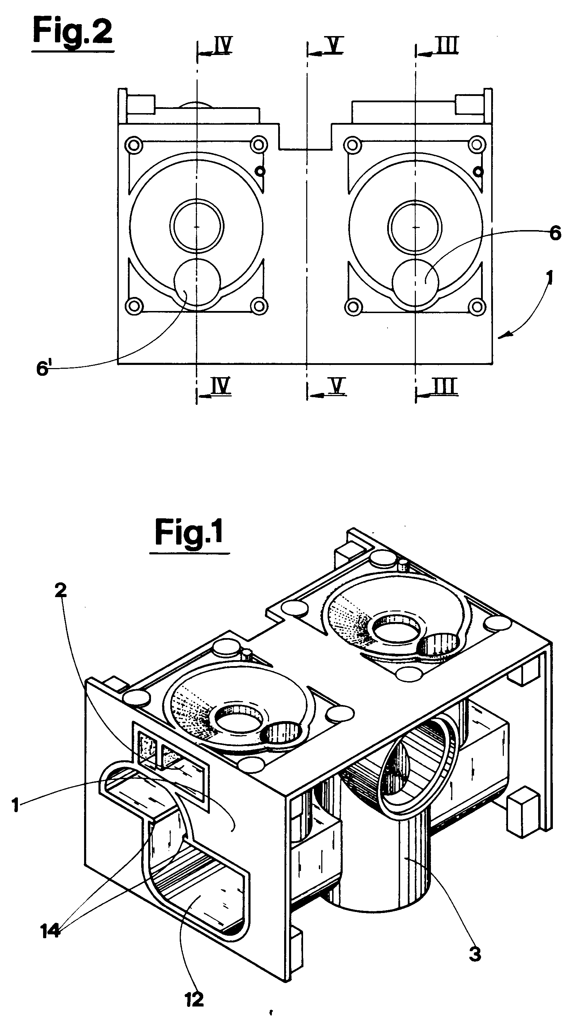

figure 1 is a perspective view of the filter plant of the invention;
figure 2 is a view from above of the plant;
figure 3 shows a section of the plant according to line III-III of figure 2;
figure 4 shows a section of the plant according to line IV-IV of figure 2;
figure 5 shows a section of the plant according to line V-V of figure 2;
figure 6 shows, in enlarged scale, a detail of a pneumatic valve and relative command devices of same;
figure 7 shows a section of the plant according to line VII-VII of figure 3;
figure 8 shows a section of the plant according to line VIII-VIII of figure 3;
figure 9 is a perspective view of the filter sequence of the plant of the invention.

With reference to the drawings, the plant comprises a box 1 containing a collector 2 which collects fluid aspirated by the tubes (not illustrated since of known type). The collector 2 is connected, through a first conduit 3, to a suction pump, which is also not illustrated since of known type. The first conduit 3 exhibits an inferior aperture and a posterior aperture, to one of which a flexible tube is connected and leads to the pump; the unused aperture obviously being thereafter closed by a cap.

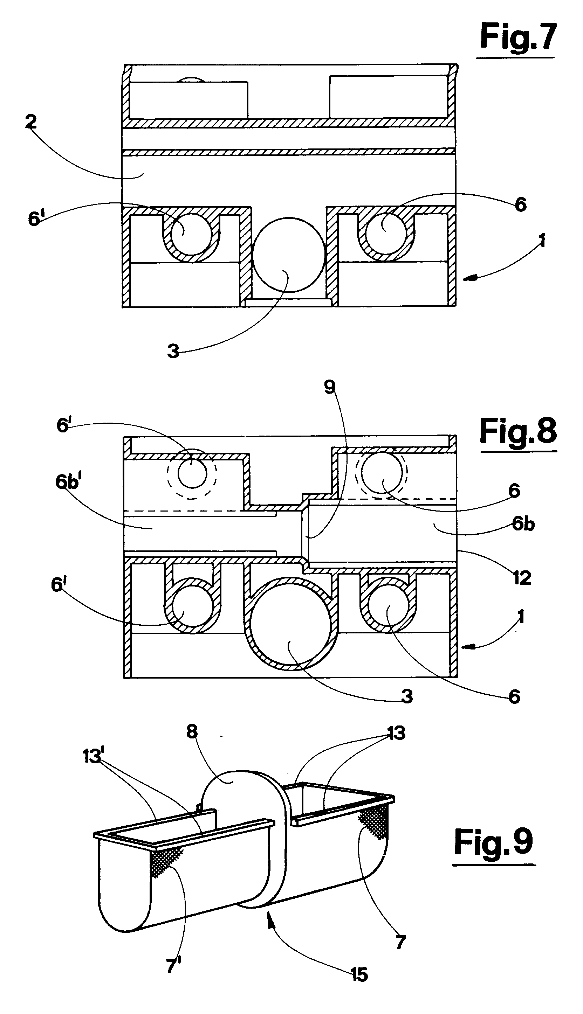

The collector 2 is connected, with an interposition of a pneumatic valve 4, 4', to each of the tubes through second conduits 6, 6', to which flexible tubes leading to the tubes are connected. The membranes of each pneumatic valve 4, 4' are commanded by known-type devices 5, 5': in figure 6, purely by way of illustration, a solenoid valve is shown which using a known technique places the upper chamber of the valve 4, 4' in communication with either the depression existing inside the plant so as to leave the valve free, or the outside atmosphere so as to close the valve. Pneumatic distributors could be used instead to activate the valves.

The illustrated plant is not provided with rests for the tubes, which are arranged in a different zone of the dentist's aspiration console. The plant can therefore be made smaller and more compact so that it can easily be contained inside the console: the invention could, however, as easily relate to apparatus provided with such tube rests.

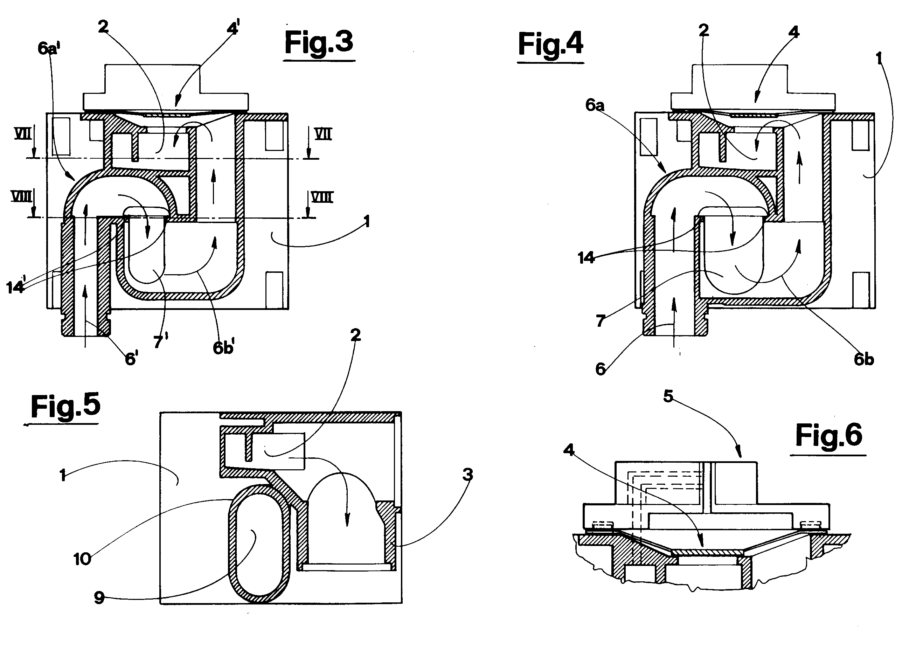

Each of the second conduits 6, 6' comprises a syphon 6a, 6a', situated inside the plant and arranged upstream of the relative valve. At a central part of the syphon is a chamber 6b, 6b' housing a filter 7, 7', which filter 7, 7' is open on an upper side and provided with perforated walls, is situated in the downward tract of the syphon 6a, 6a' and is so arranged that the aspirated fluid coming from the tube crosses it down in the downwards direction (the flow is indicated by arrows in figures 3, 4 and 5).

The illustrated plant is suitable for two tubes, and comprises a part which is common to all tubes, represented by a first conduit 3 and the collector 2, while it further comprises parts utilized specifically by each tube, represented by the valve 4, 4', the second conduits 6, 6', with a relative syphon, and by the filter 7, 7'. The above is also true of plants equipped with more than two tubes.

The shape of the second conduits 6, 6', and the arrangement of the filter, enable the fluids to be filtered before they pass through the valves 4, 4', thus eliminating, or at least greatly reducing, the amount of encrustations forming on the membranes of the valves themselves.

In order to render the plant easier to use, the filters 7 and 7' are mechanically interconnected to create a single, longitudinally-developing filter sequence 15: between one filter and another, the filter sequence 15 exhibits a closed wall 8 provided at the side facing the second filter with a seal. For reasons that will better emerge hereinafter, the filters 7, 7' have a straight constant section and the section of a filter decreases with respect to a preceding filter. The filter sequence 15 is thus constituted by a filter 7 connected to a smaller filter 7', and the same decreasing sequence would apply if a third tube were present.

The syphons 6a and 6b are interconnected by an aperture 9 afforded by a closed sealing surface 10 against which the seal element of the filter sequence 15 closed wall 8 strikes. The shape and size of the aperture 9 are such as to allow passage of the part of the following filter sequence 15 after the closed wall 8 (that is, the filter 7') which strikes against the sealing surface 10, but not such as to allow passage of the closed wall 8 itself and therefore the filter 7.

A through-hole 12 is made in the external wall of the plant, which the filter sequence 15 of the apparatus is introduced through, after which the through-hole 12 is closed by a removable cap (not illustrated).

The filters 7, 7' comprise longitudinal edges 13 made laterally to the open upper wall of the filters. Longitudinal projections 14, 14' are fashioned in the chambers 6a, 6b, on which projections the respective edges 13 and 13' rest.

From the aforegoing it is evident that while each tube zone remains completely distinct from the others (wall 8 seals on the aperture 9), a necessary condition for conservation of independent tube functioning, the conformation of the plant permits of arranging the filters upstream of the valves, leading to the described advantages, and also enables use of a single (though subdivided) large filter which can be inserted and removed from the apparatus in a single operation. This is made possible by the presence of the aperture 9 creating a kind of channel internally of the plant in which the filter sequence 15 can slide during insertion and extraction. The seal between the wall 8 and the edge 10 of the aperture 9 is intended to keep the elements relative to each tube and upstream of the collector 2 separate during functioning.

The seal between the wall 8 and the aperture 9 can be realised by means of a peripheral gasket instead of the hereindescribed frontal gasket.

Once the filter sequence 15 has been inserted in the plant, the plant functioning is the same as that of known plants, with the single important difference that by the time the fluid reaches the valves 4 and 4' it has already been filtered by the filters 7 and 7'.

## Claims

1. A filter plant for tubes of dental aspiration apparatus, comprising
a box structure (1) containing a collector (2) connected by a first conduit (3) to a suction pump and, with an interposition of a pneumatic valve (4, 4' ), also to each tube by second conduits (6, 6'); further comprising means for effecting a first filtering of fluids aspirated by the tubes, characterised in that inside the filter plant and upstream of the pneumatic valve (4, 4'), each of the second conduits (6, 6') comprises a syphon (6a, 6a') at a central part whereof is situated a chamber (6b, 6b') housing a filter (7, 7'); said filter (7, 7') being upwardly open and being provided with perforated walls, and being arranged in the downward tract of the syphon (6a, 6a') such as to be crossed down in a downwards direction by the fluids coming from each of the tubes.

2. A plant as in claim 1, characterised in that a filter is provided for each tube, and that a resulting plurality of filters (7, 7') are mechanically interconnected one to another in a single longitudinally-developing filter sequence (15), and that at least one filter (7, 7') exhibits a closed wall (8) provided, at a side facing a next filter, with a sealing element; each filter (7, 7') exhibiting a straight constant section, and each filter being of a narrower section than a preceding filter; the syphons (6a, 6a') being connected one to another through an aperture (9) afforded in a closed sealing surface (10) on which the sealing element of the closed wall (8) adheres, a size and shape of the aperture (9) being such as to permit passage of a part of the filter sequence destined to be located on a far side of said wall (8); a through hole (12) being made on an external wall of the plant for allowing introduction of the filter sequence into the plant.

3. A plant as in claim 2, characterised in that the filters (7, 7') comprise projecting longitudinal edges (13, 13') made laterally to an open upper part of the filters (7,7'); the chambers (6b, 6b') comprising longitudinal projections (14, 14') offering a rest surface for the longitudinal edges (13, 13').

## Patentansprüche

1. Filteranlage für die Schläuche einer zahnärztlichen Saugvorrichtung, beinhaltend
ein Gehäuse (1) mit einem an eine Saugpumpe durch eine erste Leitung verbundener Kollektor (2), der mittels Zwischenschaltung eines pneumatischen Ventils (4, 4') an jedem Schlauch auch mittels zweiter Leitungen (6, 6') verbunden ist; außerdem beinhaltend Mittel für eine erste Filtrierung von durch die Schläuche aufgesaugten Fluiden, dadurch gekennzeichnet daß in der Filteranlage und vor dem pneumatischen Ventil (4, 4'), in Strömungsrichtung gesehen, jede zweite Leitung (6, 6') ein Siphon (6a, 6a') beinhaltet, in deren mittleren Bereich eine Kammer (6b, 6b') mit einem inneren Filter (7, 7') angeordnet ist; wobei der Filter (7, 7') oben geöffnet und mit gebohrten Wänden bestückt, in dem unteren Segment des Siphons (6a, 6a') angeordnet ist, sodaß er von den nach unten von jedem Schlauch abströmenden Fluiden durchkreuzt wird.

2. Anlage nach Anspruch 1, dadurch gekennzeichnet daß für jedes Schlauch ein Filter vorgesehen ist und daß die resultierende Mehrzahl von Filtern (7, 7') mechanisch untereinander verbunden sind, sodaß eine in Längsrichtung sich erstreckende Filter-Folge (15) gebildet wird, und daß mindestens ein Filter (7, 7') eine geschlossene Wand (8) besitzt, die auf einer einem nächsten Filter gegenüberstehenden Seite ein Dichtungselement besitzt; wobei jeder Filter (7, 7') einen konstanten, geraden Querschnitt hat, und wobei der Querschnitt eines jeden Filters schmaler ist als der des vorgehenden Filters; wobei die Siphone (6a, 6a') untereinander mittels einer in einer geschlossenen Dichtungsfläche (10), auf der das Dichtungselement der geschlossenen Wand (8) anhaftet, angeordneten Öffnung (9) verbunden sind, wobei die Größe und die Form der Öffnung (9) so gewählt sind daß ein Teil der Filter-Folge, die auf der entfernten Seite der Wand (8) angeordnet werden muß, durch die Öffnung geführt werden kann; wobei eine Durchgangsbohrung (12) auf eine äußere Anlagenwand vorgesehen ist, zur Einführung der Filter-Folge in das Innere der Anlage.

3. Anlage nach Anspruch 2, dadurch gekennzeichnet daß die Filter (7, 7') vorstehende longitudinale Ränder (13, 13') besitzen, die auf einem offenen oberen Bereich der Filter (7, 7') gebildet sind; wobei die Kammern (6b, 6b') longitudinale Vorsprünge (14, 14') besitzen, die den longitudinalen Rändern (13, 13') eine restliche Oberfläche anbieten.

## Revendications

1. Une installation de filtration pour des tubes d'un appareil d'aspiration dentaire, comprenant
une structure parallélépipédique (1) contenant un collecteur (2) relié par un premier conduit (3) à une pompe d'aspiration et, avec l'interposition d'une valve pneumatique (4, 4'), également à chaque tube par des seconds conduits (6, 6'); comprenant de plus des moyens pour effectuer une première filtration des fluides aspirés par les tubes, caractérisés en ce qu'à l'intérieur de l'installation de filtration et en aval de la valve pneumatique (4, 4'), chacun des seconds conduits (6, 6') comprend un syphon (6a, 6a')logeant un filtre (7, 7'); ledit filtre (7, 7') étant supérieurement ouvert et étant pourvu de parois perforées, et étant disposé dans la partie basse du syphon (6a, 6a')de manière à être traversé dans une direction vers le bas par les fluides provenant de chacun des tubes.

2. Une installation selon la revendication 1, caractérisée en ce qu'un filtre est prévu pour chaque tube, et en ce qu'une conséquente pluralité de filtres (7, 7') sont mécaniquement interconnectés l'un à l'autre dans une séquence unique de filtres (15) se développant longitudinalement, et en ce qu'au moins un filtre (7, 7') présente une paroi fermée (8) pourvue, sur un côté faisant face au filtre suivant, d'un élément d'étanchéité; chaque filtre (7, 7') présente une section étroite constante, et chacun a une section plus étroite que celle du filtre précédent; les syphons (6a, 6a') étant reliés l'un à l'autre par une ouverture (9) formée dans une surface fermée d'étanchéité (10) sur laquelle l'élément d'étanchéité de la paroi fermée (8) adhère,une taille et une forme de l'ouverture (9) étant telle qu'elle permet le passage d'une partie de la séquence de filtres destinée à être située sur un côté de ladite paroi (8); un trou passant (12) étant formé sur une paroi externe de l'installation pour permettre l'introduction de la séquence de filtres dans l'installation.

3. Une installation selon la revendication 2, caractérisée en ce que les filtres (7, 7') comprennent des bords longitudinaux saillants (13, 13') disposés latéralement à une partie supérieure ouverte des filtres (7, 7'); les chambres (6b, 6b') comprenant des saillies longitudinales (14, 14') offrant une surface d'appui pour les bords longitudinaux (13, 13').
